# EUROPEAN PATENT APPLICATION

(11) **EP 3 116 176 A1**
(43) Date of publication of application: **11.01.2017**
(21) Application number: 15758246.1
(22) Date of filing: 05.03.2015
(51) Int. Cl.: H04L 12/717, H04L 12/713, H04L 12/775

(54) **COMMUNICATION SYSTEM, CONTROL DEVICE, COMMUNICATION DEVICE, AND COMMUNICATION METHOD**

(30) Priority: 06.03.2014 JP 2014043761
(71) Applicant: NEC Corporation, Tokyo 108-8001 (JP)
(72) Inventor: CUI, Zhenlong, Tokyo 108-8001 (JP); TAKAGI, Kazuo, Tokyo 108-8001 (JP); SAKURAI, Akira, Tokyo 108-8001 (JP); OKUMURA, Motoaki, Tokyo 108-8001 (JP)
(74) Representative: Reeve, Nicholas Edward
(86) International application number: PCT/JP2015/056458
(87) International publication number: WO 2015/133561

(57) **Abstract**

The present invention achieves improvement in the availability of an individual control apparatus and in the flexibility of an individual control policy in the centralized-control-type communication system. A communication system comprises: a communication apparatus(es) that processes a packet(s) in accordance with externally set control information; and a control apparatus(es) that sets control information in the communication apparatus(es) to control the communication apparatus(es). A first control unit that sets control information in accordance with a first rule(s) and a second control unit that sets control information in accordance with a second rule(s) are arranged as the control apparatus(es), and the first and second control units control the communication apparatus(es) independently of each other.

## Description

### [TECHNICAL FIELD]

### (Reference to Related Application)

The present invention is based upon and claims the benefit of the priority of Japanese patent application No. 2014-043761, filed on March 6, 2014, the disclosure of which is incorporated herein in its entirety by reference thereto.

The present invention relates to a communication system, a control apparatus, a communication apparatus, and a communication method. In particular, it relates to a packet communication system, a control apparatus, a communication apparatus, and a communication method.

### [BACKGROUND]

NPLs 1 and 2 discuss an example of a centralized-control-type communication system that includes switches that forward packets and a control apparatus(es) that controls packet forwarding by the switches.

PTL 1 discloses a centralized-control-type communication system including a control apparatus provided in a redundant fashion. According to PTL 1, if a failure or the like occurs in an active control apparatus, a standby control apparatus is alternatively activated to maintain the operation (see claim 3, for example).

PTL 2 discloses a configuration in which a centralized control apparatus in a centralized-control-type communication system as described above exchanges path information with a neighboring router(s), determines a data forwarding path(s), and generates information set in a transmission apparatus(es).

### [CITATION LIST]

### [PATENT LITERATURE]

PTL 1: Japanese Patent Kohyo Publication No. JP2013-545321A
PTL 2: International Publication No. WO2013/038987A1

### [NON PATENT LITERATURE]

NPL 1: Nick McKeown, and seven others, "OpenFlow: Enabling Innovation in Campus Networks," [online], [searched on January 22, 2014], Internet <URL: http://archive.openflow.org/documents/openflow-wp-latest.pdf>
NPL 2: "OpenFlow Switch Specification" Version 1.1.0 Implemented (Wire Protocol 0x02), [online], [searched on January 22, 2014], Internet <URL: http://archive.openflow.org/documents/openflow-spec-v1.1.0.pdf>

### [SUMMARY]

### [TECHNICAL PROBLEM]

The following analysis has been made by the present inventors. In a centralized-control-type communication system as described above, how the availability of a control apparatus is maintained is often a problem. Thus, in PTL 1, control information setting functions are separated from a control apparatus. Namely, apparatuses (processing rule setting apparatuses) are provided in a redundant fashion, and control information (which is called "processing rules" in PTL 1) is synchronized between the processing rule setting apparatuses. In this way, even if a failure occurs in one processing rule setting apparatus, a different processing rule setting apparatus can continue to provide a service(s) (see Figs. 10 to 13 in PTL 1).

However, with the configuration in PTL 1, since the processing rule setting apparatuses need to share exactly the same control information, large overhead is needed for the synchronization processing, depending on the scale of the system.

In addition, with the configuration in PTL 1, since the processing rule setting apparatuses need to share exactly the same control information, the configuration is not suitable for an application in which a plurality of control apparatuses are operated with different control policies.

It is an object of the present invention to provide a communication system, a control apparatus, a communication apparatus, and a communication method that can contribute to improvement in the availability of an individual control apparatus and in the flexibility of an individual control policy in the centralized-control-type communication system.

### [SOLUTION TO PROBLEM]

According to a first aspect, there is provided a communication system, comprising: a communication apparatus(es) that processes a packet(s) in accordance with externally set control information; and a control apparatus(es) that sets control information in the communication apparatus(es) to control the communication apparatus(es). Moreover, a first control unit that sets control information in accordance with a first rule(s) and a second control unit that sets control information in accordance with a second rule(s) are arranged as the control apparatus(es). The first and second control units control the communication apparatus(es) independently of each other.

According to a second aspect, there is provided a control apparatus for controlling a communication apparatus(es) that process a packet(s) in accordance with externally set control information. Moreover, the control apparatus comprises a first control unit that sets control information in accordance with a first rule(s). Further, the control apparatus comprises a second control unit that sets control information in accordance with a second rule(s). The first and second control units control the communication apparatus(es) independently of each other.

According to a third aspect, there is provided a communication apparatus for controlling a communication apparatus(es) that processes packets in accordance with externally set control information. The communication apparatus controls the communication apparatus(es) in accordance with a second rule(s), independently of a control apparatus that sets control information in accordance with a first rule(s).

According to a fourth aspect, there is provided a communication apparatus, connected to a first control unit that sets control information in accordance with a first rule(s) and a second control unit that sets control information in accordance with a second rule(s), the first and second control units operating independently of each other. The communication apparatus processes a packet(s) in accordance with control information set by the first and second control units.

According to a fifth aspect, there is provided a communication method for a communication system including a communication apparatus(es) that processes a packet(s) in accordance with externally set control information and a control apparatus(es) that controls the communication apparatus(es) by setting control information in the communication apparatus(es). The communication method comprises: by a first control unit that sets control information in accordance with a first rule(s) and a second control unit that sets control information in accordance with a second rule(s), operating as the control apparatus(es) independently of each other to set control information in the communication apparatus(es); and by the communication apparatus(es), processing a packet(s) in accordance with the control information. This method is associated with certain machines, namely, with a communication apparatus(es) that processes a packet(s) in accordance with control information and a control apparatus(es) that controls the communication apparatus(es).
An individual element in the communication system, the control apparatus, the communication apparatus, and the program contributes to solving the above problems.

### [ADVANTAGEOUS EFFECTS OF INVENTION]

The present invention can contribute to improvement in the availability of an individual control apparatus and in the flexibility of an individual control policy in the centralized-control-type communication system.

### [BRIEF DESCRIPTION OF THE DRAWINGS]

Fig. 1 illustrates a configuration of a communication system according to a first exemplary embodiment of the present invention.
Fig. 2 is a block diagram illustrating a detailed configuration of a control apparatus according to the first exemplary embodiment of the present invention.
Fig. 3 is a sequence diagram illustrating an operation according to the first exemplary embodiment of the present invention.
Fig. 4 illustrates a configuration of a communication system according to a second exemplary embodiment of the present invention.
Fig. 5 illustrates a configuration of a communication system according to a third exemplary embodiment of the present invention.
Fig. 6 illustrates an operation according to the third exemplary embodiment of the present invention.
Fig. 7 illustrates a configuration of a communication system according to a fourth exemplary embodiment of the present invention.
Fig. 8 illustrates a variation of the communication system according to the fourth exemplary embodiment of the present invention.
Fig. 9 illustrates an example of a configuration of a network system according to a fifth exemplary embodiment of the present invention.
Fig. 10 illustrates a schematic configuration of a communication apparatus according to the fifth exemplary embodiment of the present invention.
Fig. 11 illustrates an example of a configuration of a communication apparatus according to the fifth exemplary embodiment of the present invention.
Fig. 12 illustrates an example of a configuration of first and second control path management tables held in the communication apparatus according to the fifth exemplary embodiment of the present invention.
Fig. 13 illustrates an example of a configuration of first and second data forwarding tables held in the communication apparatus according to the fifth exemplary embodiment of the present invention.
Fig. 14 illustrates an example of a configuration of a control apparatus according to the fifth exemplary embodiment of the present invention.
Fig. 15 is a flowchart illustrating an example of an operation performed by the communication apparatus according to the fifth exemplary embodiment of the present invention.
Fig. 16 is a flowchart illustrating an example of an operation performed by a data path setting unit in the control apparatus according to the fifth exemplary embodiment of the present invention.
Fig. 17 is a flowchart illustrating an example of an operation performed by a mapping setting unit in the control apparatus according to the fifth exemplary embodiment of the present invention.

### [DESCRIPTION OF EMBODIMENTS]

### (First Exemplary Embodiment)

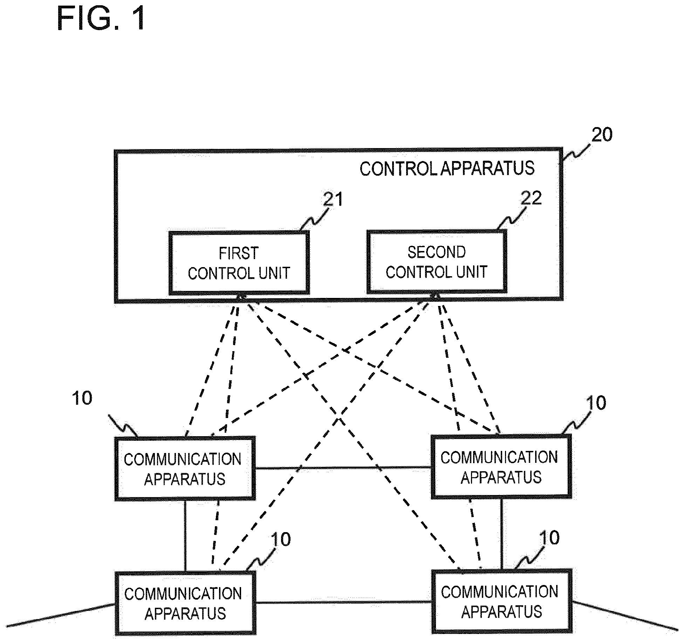

First, a first exemplary embodiment of the present invention will be described in detail with reference to the drawings. Fig. 1 illustrates a configuration of a communication system according to the first exemplary embodiment of the present invention. Fig. 1 illustrates a communication system including communication apparatuses 10, an individual one of which processes packets in accordance with externally set control information, and a control apparatus 20 that controls the communication apparatuses 10 by setting control information in the communication apparatuses 10.

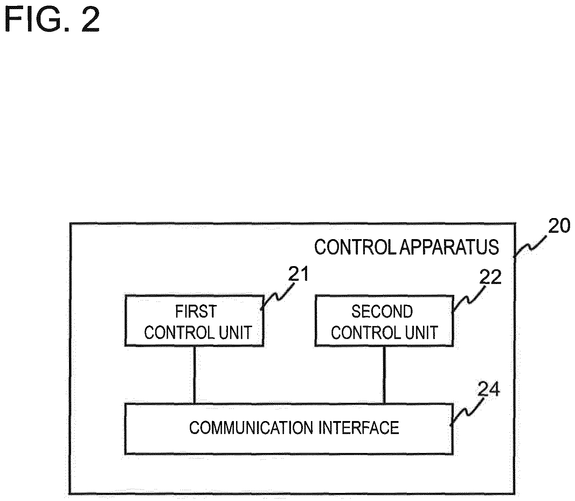

Fig. 2 illustrates a detailed configuration of the control apparatus 20 according to the present exemplary embodiment. The control apparatus 20 includes first and second control units 21 and 22 and a communication interface 24. The communication interface 24 transmits control information to the communication apparatuses 10. The first and second control units 21 and 22 set control information in the communication apparatuses 10 via the communication interface 24.

In addition, the first and second control units 21 and 22 virtually or physically divide hardware resources of the control apparatus 20 in accordance with a predetermined rule. In addition, each of the first and second control units 21 and 22 independently controls the communication apparatuses 10 in accordance with their respective policies.

For example, the first and second control units 21 and 22 may be divided by a predetermined rule such as a control target communication apparatus 10 or communication port, a network user, or a network policy. The first and second control units 21 and 22 may control the same communication apparatus 10 or communication port. The first and second control units 21 and 22 may control communication apparatuses 10 by using the same policy.

An individual piece of control information is based on a policy of an individual one of the first and second control units 21 and 22 and is about packet processing performed by a communication apparatus(es) 10. The first and second control units 21 and 22 individually set control information via the communication interface 24.

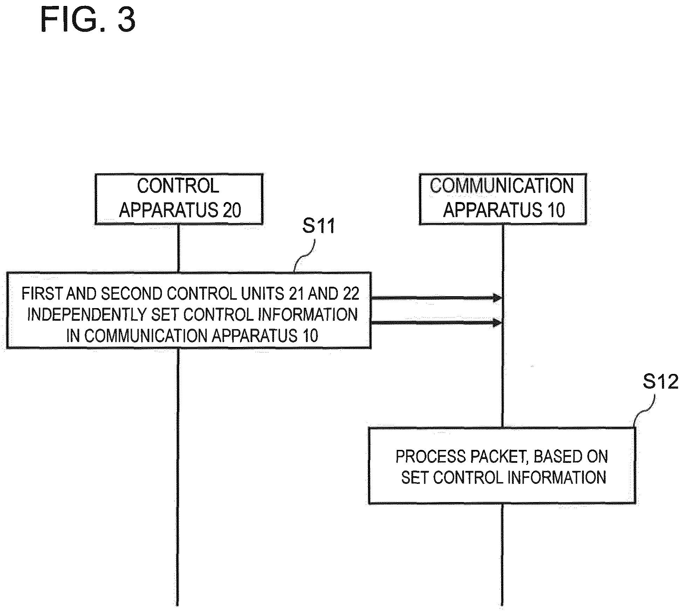

Fig. 3 illustrates an example of an operation of the communication system according to the present exemplary embodiment. First, each of the first and second control units 21 and 22 in the control apparatus 20 independently sets control information in a communication apparatus 10 via the communication interface 24 (step S11).

Next, the communication apparatus 10 processes externally inputted packets in accordance with the control information set by the control apparatus (step S12). Examples of the packet processing include packet forwarding, rewriting, and dropping.

By arranging the plurality of control units 21 and 22 as described above, overhead for synchronization between control apparatuses, which is needed in the configuration in PTL 1, can be eliminated. With this configuration according to the present exemplary embodiment, since these control apparatuses do not always need to be operated in synchronization with each other, each of the control apparatuses can be operated with a different control policy.

However, with the configuration according to the present exemplary embodiment, when the first and second control units 21 and 22 control the same communication apparatus 10, it is necessary to avoid a situation in which the control information to be set in the communication apparatus 10 conflict with each other. For example, it is possible to avoid such a conflict by previously determining which of the first and second control units 21 and 22 performs processing per packet or by previously determining priority levels of the first and second control units 21 and 22. Of course, the information about the policy, the load status, or the like may be exchanged between the first and second control units 21 and 22. In addition, the number of control units in the control apparatus 20 is not limited to 2. For example, 3 or more control units may be arranged, and each of the control units may be independently operated.

### (Second Exemplary Embodiment)

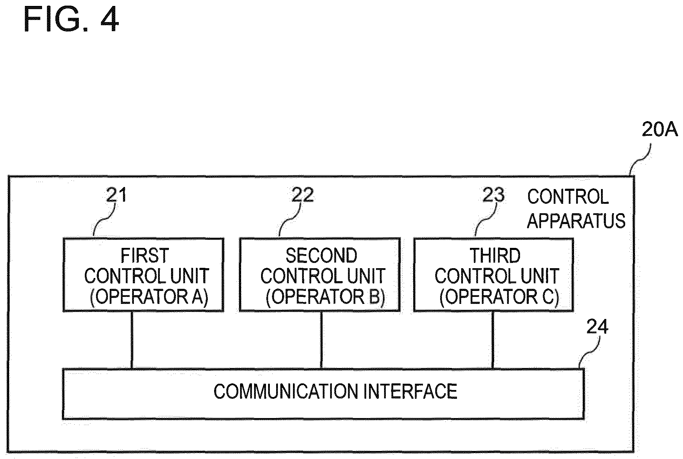

A control unit in the control apparatus 20 according to the above first exemplary embodiment may be allocated to an individual network operator. Hereinafter, a specific example of such case will be described in detail. The communication system according to the present exemplary embodiment has the same configuration as that illustrated in Fig. 1, except that a control apparatus 20A is included in place of the control apparatus 20. Fig. 4 illustrates a configuration of the control apparatus 20A according to the present exemplary embodiment of the present invention. The control apparatus 20A includes first to third control units 21 to 23.

In the example in Fig. 4, the first to third control units 21 to 23 are allocated to operators A to C, respectively, and each of the operators is able to use a control unit as if the control unit were a dedicated control apparatus.

Each of the first to third control units 21 to 23 independently sets control information in an individual communication apparatus 10 in a network via the communication interface 24. An individual communication apparatus 10 processes inputted packets in accordance with the set control information.

According to the present exemplary embodiment, when a plurality of operators share a network, there is no need to achieve consistency of resources between operators, for example. Namely, network control can be performed without regard to other operators.

The resources of the control apparatus 20 are allocated to the first to third control units 21 to 23, which are used by the respective operators. A different amount of resources may be allocated to each of the operators, depending on priority levels of the respective operators or load amounts placed on the respective control units, for example. Allocation of the resources to an individual operator may dynamically be changed or added.

### (Third Exemplary Embodiment)

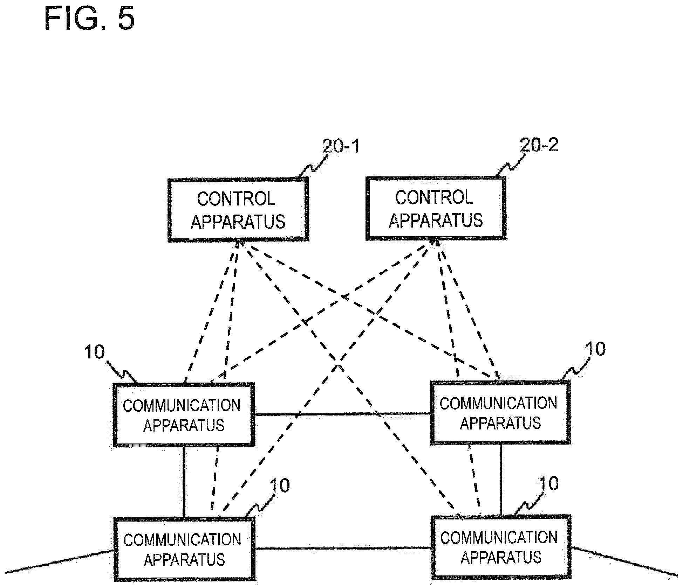

While the control units in the above control apparatus can be arranged as a single physical control apparatus, physically-divided control units may be arranged in two or more control apparatuses, respectively. Fig. 5 illustrates a configuration of a communication system according to a third exemplary embodiment of the present invention. In the example in Fig. 5, two control apparatuses 20-1 and 20-2 are arranged, and each of the control apparatuses independently sets control information in an individual one of the communication apparatuses 10.

In addition, among the communication apparatuses 10 included in the communication system according to the present exemplary embodiment, at least one communication apparatus 10 is connected to both of the control apparatuses 20-1 and 20-2 (see dashed lines in Fig. 5).

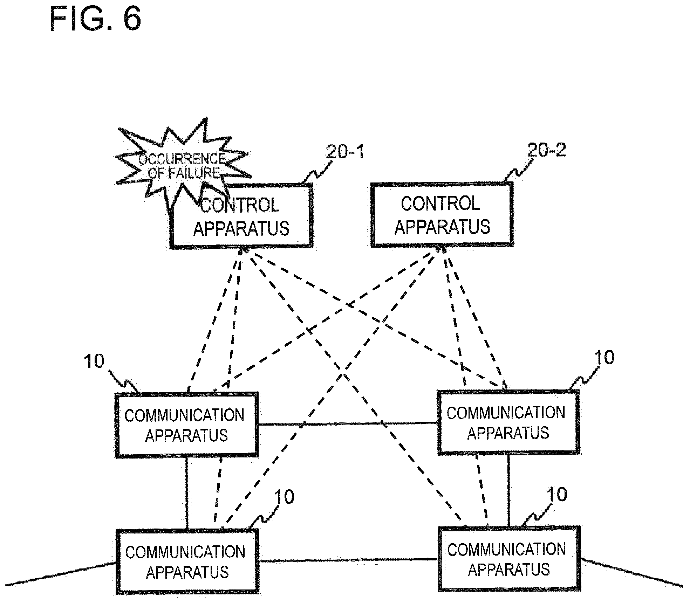

As an example of the operations according to the present exemplary embodiment, an operation performed when a failure occurs will be described. Fig. 6 illustrates an example in which a failure occurs in the control apparatus 20-1 in the present exemplary embodiment. In the communication system in Fig. 6, the other control apparatus (for example, the control apparatus 20-2) monitors and detects the occurrence of this failure.

In one example of the method of monitoring the occurrence of the failure, a communication apparatus 10 connected to both of the control apparatuses 20-1 and 20-2 detects disconnection of a communication with the control apparatus 20-1. In such case, the communication apparatus 10 that has detected the disconnection determines that a failure has occurred and notifies the control apparatus 20-2 of the occurrence of the failure. Next, in place of the control apparatus 10 in which the failure has occurred, the control apparatus 20-2 controls this communication apparatus 10.

The occurrence of a failure may be monitored by causing the control apparatuses 20-1 and 20-2 to mutually check presence of the occurrence of a failure on a regular basis, for example.

With the above configuration, since two physical control apparatuses are used, the load balancing function can be improved. In addition, for example, even if a failure occurs in one control apparatus or in a link between a control apparatus and a communication apparatus, since the other control apparatus is activated alternatively, the operation can continuously be performed. Thus, the availability is also improved.

### (Fourth Exemplary Embodiment)

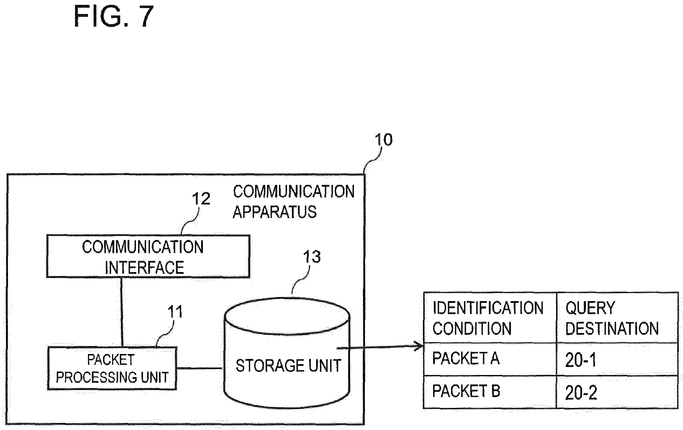

While a configuration of the communication apparatuses is not particularly defined in the above embodiments, an individual one of the communication apparatuses 10 may have a function of selectively using a control apparatus. For example, in the example in Fig. 7, control information in which a query destination (a node to which a control information setting request is transmitted) is defined per flow is set in an individual one of the communication apparatuses 10.

Fig. 7 illustrates a configuration of a communication apparatus 10 according to the present exemplary embodiment. The communication system according to the present exemplary embodiment has the same configuration as that illustrated in Fig. 5, except that an individual one of the communication apparatuses 10 has a function of selecting one of the control apparatuses 20-1 and 20-2 as a packet query destination. The communication apparatus 10 illustrated in Fig. 7 includes a packet processing unit 11 that processes packets inputted to the communication apparatus 10, a communication interface 12 that communicates with the control apparatuses 20-1 and 20-2, and a storage unit 13.

Examples of the packet processing performed by the packet processing unit 11 include forwarding of packets to a different communication apparatus(es), rewriting, and dropping. The communication interface 12 transmits queries about packet processing to the control apparatuses 20-1 and 20-2 and receives control information transmitted from the control apparatuses. The storage unit 13 includes a table in which an identification condition(s) (a match condition(s)) and a query destination control apparatus(es) are associated with each other. For example, the identification conditions represent a packet type, an input port, etc., and a query destination control apparatus is associated with these identification conditions.

The packet processing unit 11 refers to the table in the storage unit 13 and queries a control apparatus about processing on an inputted packet via the communication interface 12. In the example in Fig. 7, if a packet whose packet type is packet A is inputted, the packet processing unit 11 refers to the table in the storage unit 13 and queries the control apparatus 20-1 about processing on the packet. Likewise, if a packet whose packet type is packet B is inputted, the packet processing unit 11 refers to the table in the storage unit 13 and queries the control apparatus 20-2 about processing on the packet.

For example, an individual one of the communication apparatuses includes another table about packet processing in the storage unit 13 or a storage area (not illustrated). If a packet that is not registered in this table is inputted, the packet processing unit 11 may query a control apparatus about processing on the packet.

If the first control apparatus 20-1 receives the request, the first control apparatus 20-1 determines a processing content(s) applied to the packet A and sets control information in which the processing content(s) is defined in the communication apparatus 10 via the communication interface 24. Likewise, when the second control apparatus 20-2 receives the request, the second control apparatus 20-2 determines a processing content(s) applied to the packet B and sets control information in which the processing content(s) is defined in the communication apparatus 10 via the communication interface 24. The control information in the communication apparatus 10 in Fig. 7 is initial-state control information. The control apparatuses 20-1 and 20-2 may set the respective initial-state control information in the communication apparatus 10. Of course, a network administrator may set the initial-state control information.

As is clear from the example according to the present exemplary embodiment, with a configuration using a single control apparatus (control unit) or the configuration according to PTL 1, the single control apparatus (control unit) needs to create and set control information for both the packets A and B. However, as is clear from the description made with reference to Fig. 4, according to the present exemplary embodiment, processing can be distributed to a plurality of independently operating control apparatuses (control units).

In addition, as a variation, an individual one of the control apparatuses 20 may dynamically change the allocation of the forwarding resources of the communication apparatuses 10. In this exemplary embodiment, for example, when the load on a control apparatus 120 is increased to a larger level, the control apparatus 120 transfers a flow(s) that the control apparatus 120 has been processing to the other control apparatus 20. For example, this transfer can be realized by causing a control apparatus 20 to instruct a communication apparatus 10 to change a control information setting request destination. Conversely, when the load on a control apparatus 120 is decreased to a smaller level, the control apparatus 120 can take charge of a flow(s) that the other control apparatus 20 has been processing. This transfer can also be realized by causing a control apparatus 20 to instruct a communication apparatus 10 to change a control information setting request destination to the control apparatus 20. The association between an individual control apparatus and forwarding resources of an individual communication apparatus may be changed depending on not only the load status but also a communication policy(ies). For example, from a viewpoint of power saving, one control apparatus is caused to control a communication apparatus(es) while the other control apparatus is maintained in a sleep state.

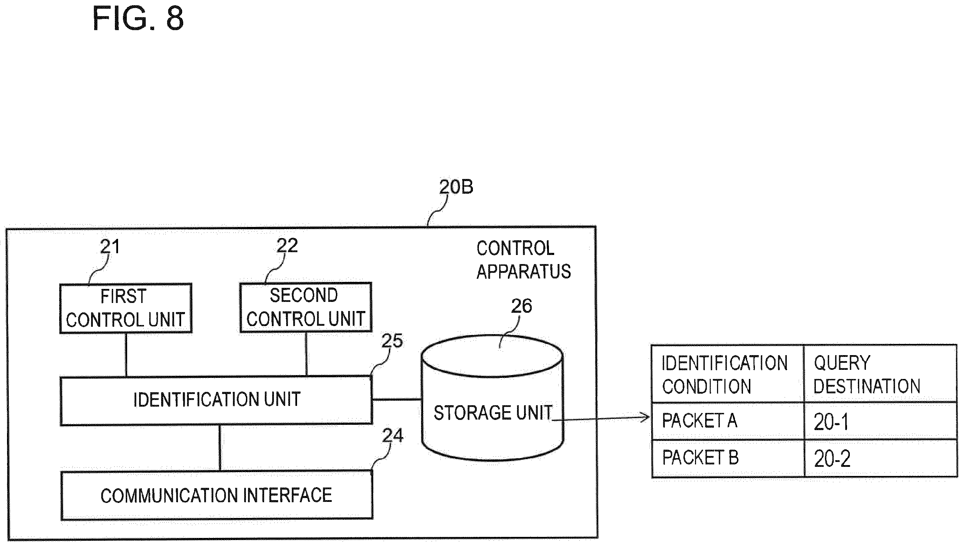

The above example has been described assuming that an individual one of the communication apparatuses 10 performs allocation of its control resource. However, this allocation may be performed by an individual one of the control apparatuses 20. Fig. 8 illustrates a configuration of a control apparatus 20B according to a variation of the present exemplary embodiment. The control apparatus 20B includes first and second control units 21 and 22, a communication interface 24, an identification unit 25, and a storage unit 26. The first and second control units 21 and 22 and the communication interface 24 have the same functions as those in Fig. 2.

The storage unit 26 includes a table in which an identification condition(s) and a query-destination control unit(s) are associated with each other, as is the case with the storage unit 13 in Fig. 7. The identification unit 25 refers to the table in the storage unit 26 and forwards a packet-processing-related query transmitted from a communication apparatus to one of the first and second control units 21 and 22. When the corresponding control apparatus receives the query, the control apparatus determines a processing content(s) applied to the matching packet(s) and sets control information in which the processing content(s) is defined in the corresponding communication apparatus 10 via the communication interface 24. The information in the table in the storage unit 26 may be set by the first and second control units 21 and 22, for example.

According to the present variation, too, the identification unit 25 may dynamically change the allocation to the first and second control units 21 and 22, depending on the load status, a policy(ies), etc. This is realized by, for example, updating a flow table indicating the correspondence between an identification condition(s) and a query-destination control unit in the storage unit 26.

### (Fifth Exemplary Embodiment)

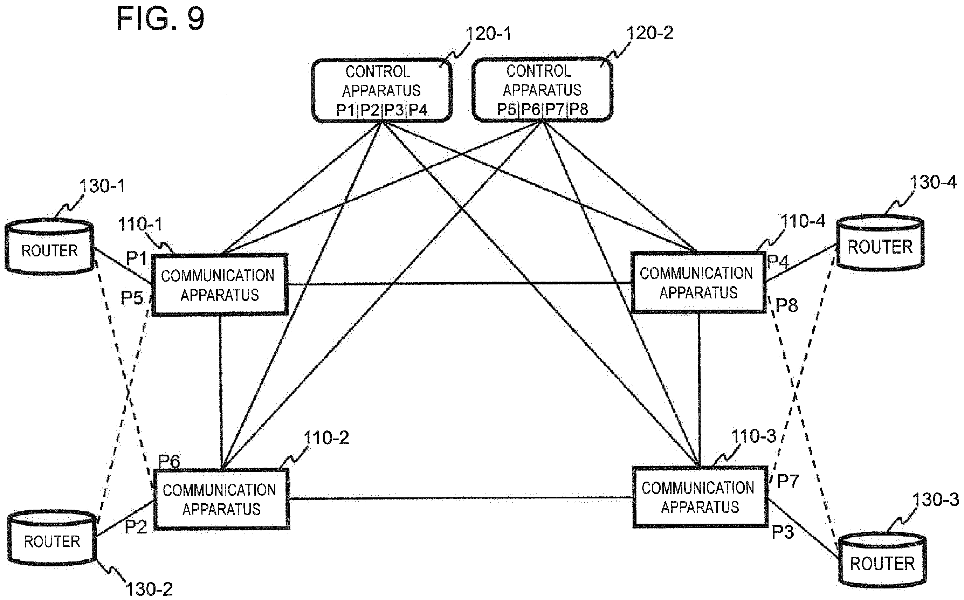

Next, a fifth exemplary embodiment will be described in detail with reference to the drawings. In the fifth exemplary embodiment, the load balancing function and the failure recovery function are further improved by causing edge routers (hereinafter referred to as "routers") and the above plurality of control apparatuses connected to the communication apparatuses to exchange path information. In the above third exemplary embodiment, the communication apparatuses 10 and the control apparatus 20-2 check whether a failure has occurred in the control apparatus 20-1. In contrast, in the present exemplary embodiment, by causing the routers and the above plurality of control apparatuses 20-1 and 20-2 connected to the communication apparatuses to exchange path information, a failure is detected. In addition, load balancing is achieved by causing the edge routers to perform failure switching. As a means for performing the failure switching, for example, a method in which path information is exchanged by using an existing IP protocol such as BGP (Border Gateway Protocol) or OSPF (Open Shortest Path First) may be used. In addition, as a means for performing the load balancing, a traffic distribution technique that uses ECMP (Equal Cost Multi Path) defined in IEEE 802.1Qbp or LACP (Link Aggregation Control Protocol) defined in IEEE 802.3ad may be used, for example. While a different protocol is used depending on whether to exchange path information or perform load balancing, the both are similar in terms of the concept in which the control apparatuses 20-1 and 20-2 terminate their communication and control the communication apparatuses 10. Thus, the present exemplary embodiment will be described assuming that failure-based path switching is performed by using the IP protocol such as BGP or OSPF, as an example. Fig. 9 illustrates an example of a configuration of a communication system according to the fifth exemplary embodiment. As illustrated in Fig. 9, the configuration includes routers 130-1 to 130-4, communication apparatuses 110-1 to 110-4, and control apparatuses 120-1 to 120-2. In Fig. 9, the routers 130-1 to 130-4 are connected to the communication apparatuses 110-1 to 110-4 by solid lines, respectively. These solid lines indicate paths that are set. The dashed lines in Fig. 9 indicate paths that are not set.

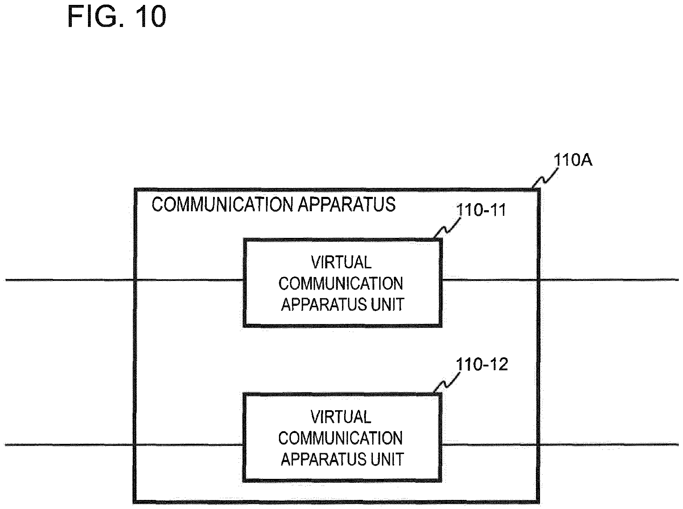

Hereinafter, a configuration of the communication apparatuses 110-1 to 110-4 and the control apparatus 120-1 to 120-2 according to the fifth exemplary embodiment of the present invention will be described with reference to Figs. 10 to 14.

First, a mechanism of an individual one of the communication apparatuses that is for avoiding a conflict of control by the plurality of control apparatuses 120-1 and 120-2 will be described. Fig. 10 illustrates a schematic configuration of a communication apparatus according to the present exemplary embodiment. More specifically, Fig. 10 illustrates a configuration of a communication apparatus 110A whose internal resources have been divided as a virtual communication apparatus unit 110-11 and a virtual communication apparatus unit 110-12. By configuring the communication apparatus 110-1 in this way, a conflict of control by the plurality of control apparatuses can be avoided. The virtual communication apparatus units 110-11 and 110-12 in Fig. 10 are illustrated only for describing the concept of dividing the internal resources. Thus, there is no need to completely separate all the blocks. No particular problem is caused even when these virtual communication apparatus units are implemented in a physically single block.

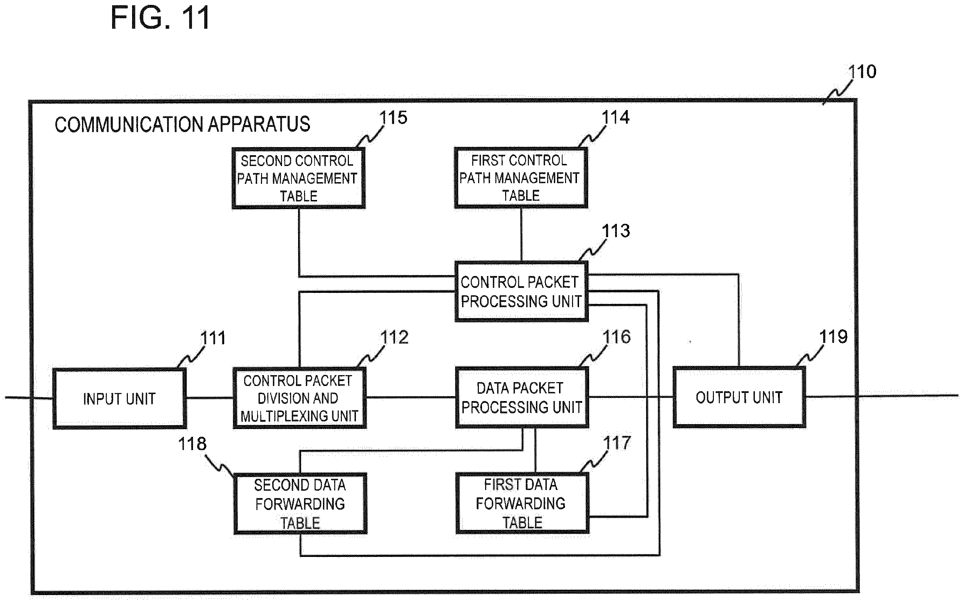

Fig. 11 illustrates an example of a specific configuration of an individual one of the communication apparatuses 110-1 to 110-4 whose internal resources have been divided as described above. Since the communication apparatuses 110-1 to 110-4 have the same configuration, any one of these communication apparatuses 110-1 to 110-4 will be referred to as a "communication apparatus 110" for each of description, unless these communication apparatuses 110-1 to 110-4 need to be particularly distinguished from each other.

As illustrated in Fig. 11, the communication apparatus 110 includes an input unit 111, a control packet division and multiplexing unit 112, a control packet processing unit 113, first control path management tables 114, second control path management tables 115, a data packet processing unit 116, first data forwarding tables 117, second data forwarding tables 118, and an output unit 119.

The input unit 111 is an interface that forwards a packet from other communication apparatuses 110-2, the control apparatuses 120-1 to 120-2, or the external edge routers 130-1 to 130-4 to the control packet division and multiplexing unit 112. When receiving the packet, the input unit 111 notifies the control packet division and multiplexing unit 112 of information about a port (including a logical port) to which the packet has been inputted. Hereinafter, when the control apparatuses 120-1 to 120-2 do not need to be particularly distinguished from each other, any one of the control apparatuses 120-1 to 120-2 will be referred to as a "control apparatus 120." Likewise, when the edge routers 130-1 to 130-4 do not need to be particularly distinguished from each other, any one of the edge routers 130-1 to 130-4 will be referred to as an "edge router 130."

The control packet division and multiplexing unit 112 checks the header of the packet received from the input unit 111 and determines whether the received packet is a control packet. If, as a result of the determination, the received packet is a control packet that should be terminated by a control apparatus, the control packet division and multiplexing unit 112 forwards the control packet to the control packet processing unit 113. In contrast, if the received packet is a packet other than the above control packet, the control packet division and multiplexing unit 112 forwards the packet to the data packet processing unit 116. In addition, when forwarding a packet to the control packet processing unit 113 or the data packet processing unit 116, the control packet division and multiplexing unit 112 also notifies input port information received from the input unit 111.

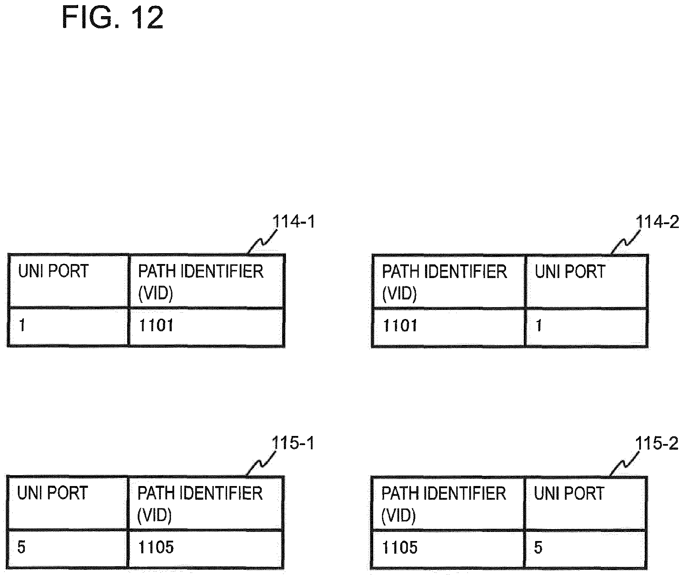

If the received control packet is a control packet transmitted from the edge router 130, the control packet processing unit 113 refers to a first control path management table 114 (see reference numeral 114-1 in Fig. 12) or a second control path management table 115 (see reference numeral 115-1 in Fig. 12), converts the packet into a frame (referred to as a "control path frame") to which corresponding control path information is attached, and instructs the output unit 119 to forward the converted packet to the control apparatus 120. As will be described below, the control packet processing unit 113 can determine which one of the first and second control path management tables to refer to, by checking the input port of the received packet or the header of the received packet, for example. If the received control packet is a control packet transmitted from the control apparatus 120, the control packet processing unit 113 refers to a first control path management table 114 (see reference numeral 114-2 in Fig. 12) or a second control path management table 115 (see reference numeral 115-2 in Fig. 12), extracts a control packet from the control path frame, determines the output port, and instructs the output unit 119 to forward the packet.

The first control path management tables 114 are tables holding entries, and input port information and a path identifier are associated with each other in each of the entries. The contents of the first control path management tables 114 are managed by the control apparatus 120-1. The top tables in Fig. 12 are examples of the first control path management tables 114. For example, when a communication apparatus 110 receives a control packet from an edge router 130, the control packet processing unit 113 refers to the control path management table 114-1 and determines a path identifier to be included in a control path frame from a reception port (UNI (User Network Interface) port). If, for example, a communication apparatus 110 receives a control packet from the control apparatus 120-1 or 120-2, the communication apparatus 110 refers to the control path management table 114-2 and determines a port (UNI port) via which the packet is outputted, based on a path identifier extracted from a control path frame. In the example in Fig. 12, VLAN IDs (VIDs) are used as the path identifiers. However, the path identifiers are not limited to the VIDs. Namely, any kind of identifiers may be used, as long as the communication apparatuses 110 can determine the connection ports of the edge routers 130-1 to 130-4.

As is the case with the above first control path management tables 114, the second control path management tables 115 are tables holding entries, and input port information and a path identifier are associated with each other in each of the entries. The second control path management tables 115 are managed by the control apparatus 120-2. The bottom tables in Fig. 12 are examples of the second control path management tables 115. Details of the second control path management tables 115 are the same as those of the first control path management tables 114, specific description thereof will be omitted.

If the received data packet is one transmitted from an edge router 130, the data packet processing unit 116 searches a first data forwarding table 117 and a second data forwarding table 118 by using the destination information and the input port of the data packet as keys and determines a path ID. In addition, the data packet processing unit 116 performs frame conversion for enabling transmission on a path between the relevant communication apparatuses 110 and forwards the packet to the output unit 119.

In addition, if the received data packet is one transmitted from another communication apparatus 110, the data packet processing unit 116 searches a first data forwarding table 117 and a second data forwarding table 118 by using path information and destination information of the frame in which the data packet is stored as keys and determines an output port via which the data packet is outputted. Next, the data packet processing unit 116 performs frame conversion for forwarding the packet to an edge router 130, specifies the determined output port, and forwards the packet to the output unit 119.

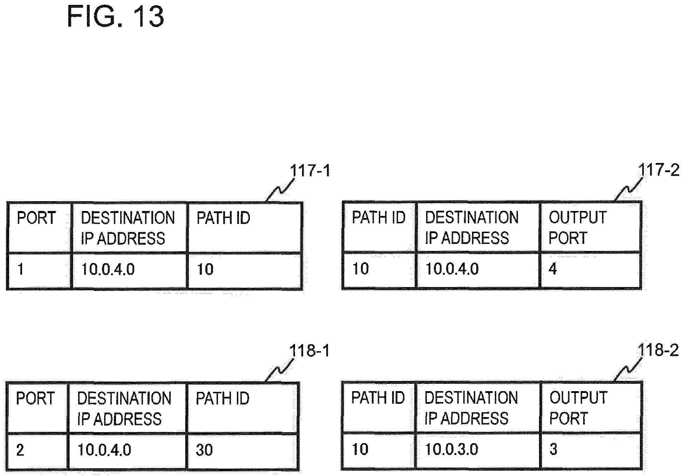

The first data forwarding tables 117 are tables holding entries, and port information, destination information, and a path ID, which is a data path ID, are associated with each other in each of the entries. The first data forwarding tables 117 are managed by the control apparatus 120-1. Fig. 13 illustrates examples of the first data forwarding tables 117 and the second data forwarding tables 118. For example, when a communication apparatus 110 receives a data packet from an edge router 130, the communication apparatus 110 refers to a first data forwarding table 117-1 illustrated at the top left in Fig. 13 and determines a path ID corresponding to the reception port and the destination information (destination IP address). If, for example, a communication apparatus 110 receives a data packet from another communication apparatus 110-2, the communication apparatus 110 refers to a first data forwarding table 117-2 illustrated at the top right in Fig. 13 and determines a output port corresponding to the path information and the destination information (destination IP address) of the received data packet.

As is the case with the first data forwarding tables 117, the second data forwarding tables 118 illustrated at the bottom in Fig. 13 are tables holding entries, and port information, destination information, and a path ID are associated with each other in each of the entries. The second data forwarding tables 118 are managed by the control apparatus 120-2. As illustrated at the bottom in Fig. 13, details of the second data forwarding tables 118 are the same as those of the first data forwarding tables 117, detailed description thereof will be omitted.

The output unit 119 is an interface that forwards packets to other communication apparatuses 110, the control apparatuses 120, or the edge routers 130 in accordance with instructions from the control packet processing unit 113 or the data packet processing unit 116.

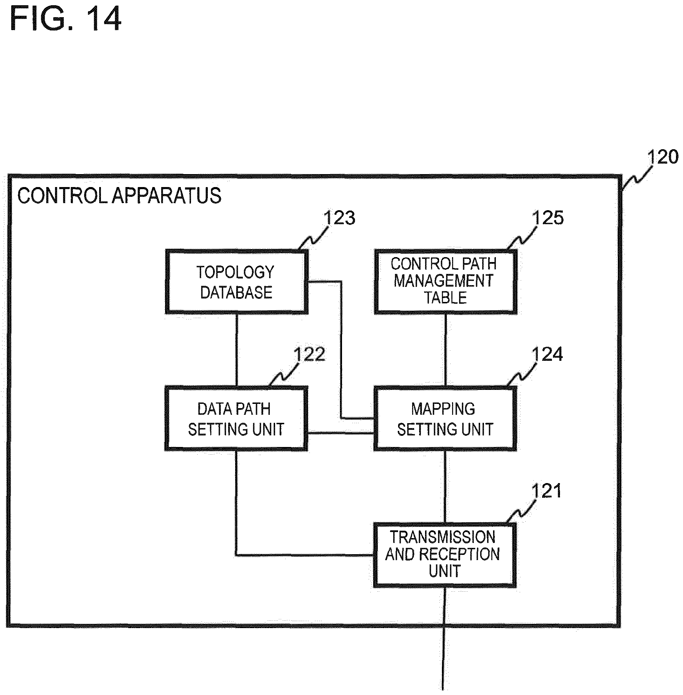

Fig. 14 illustrates a configuration of a control apparatus 120 according to the fifth exemplary embodiment of the present invention. As illustrated in Fig. 14, the control apparatus 120 includes a transmission and reception unit 121, a data path setting unit 122, a topology database 123, a mapping setting unit 124, and a control path management table 125.

The transmission and reception unit 121 is an interface that transmits and receives control packets to and from the communication apparatuses 110.

The data path setting unit 122 sets a transmission path(s) between or among the communication apparatuses 110 and registers the set transmission path(s) in the topology database 123. An administrator may set the transmission path(s) or the data path setting unit 122 may calculate the transmission path(s) based on a connection relationship between or among communication apparatuses in accordance with a predetermined path calculation rule(s).

The topology database 123 is a database in which information about a transmission path(s) set by the data path setting unit 122 is stored, for example. The topology database 123 is referred to when the mapping setting unit 124 calculates a transmission path(s) between or among communication apparatuses.

The mapping setting unit 124 is connected to the communication apparatuses 110 via the transmission and reception unit 121 and exchanges control packets with the edge routers 130 via the communication apparatuses 110. The mapping setting unit 124 instructs an individual one of the communication apparatuses 110 about an edge router 130 to which the communication apparatus 110 needs to forward control packets. More specifically, the mapping setting unit 124 converts a control packet into a control path frame in accordance with a control path obtained by referring to the control path management table 125 and forwards the control path frame to the transmission and reception unit 121. In addition, when receiving a control path frame from the transmission and reception unit 121, the mapping setting unit 124 acquires information about the interface of the communication apparatus 110 corresponding to the header of the received control path frame from the control path management table 125. In addition, the mapping setting unit 124 updates the data forwarding table s 117/118 in the communication apparatus(es) 110, in accordance with the content of the control packet stored in the control path frame.

The control path management table 125 is a table holding entries, and in each of the entries, interface information (UNI port) about a communication apparatus 110 connected to an edge router(s) and a control path header are associated with each other. For example, the control path management table 125 can be configured in the same way as the first and second control path management tables 114 and 115 in Fig. 12.

In addition, the control apparatus 120 includes an ARP (Address Resolution Protocol) table (not illustrated). The control apparatus 120 has a function of updating the ARP table in response to an ARP request from the edge router 130 and responding to the ARP request.

Each unit (processing means) in the communication apparatus 110 and control apparatus 120 illustrated in Figs. 11 and 14 may be realized by a computer program which causes a computer that constitutes a corresponding one of the apparatuses to use its hardware and perform corresponding processing described above.

Next, an operation in the network system according to the fifth exemplary embodiment of the present invention will be described. First, a basic concept of the present exemplary embodiment will be described. In the present exemplary embodiment, an individual one of the control apparatuses 120-1 and 120-2 according to the fifth exemplary embodiment of the present invention illustrated in Fig. 9 is provided with a different IP address. In addition, by activating a control protocol for each of the control apparatuses 120, a combination of the communication apparatuses 110-1 to 110-4 and the control apparatus 120-1 and a combination of the communication apparatuses 110-1 to 110-4 and the control apparatus 120-2 are operated as two independent communication systems.

For example, assuming that IP addresses A and B are set for the control apparatuses 120-1 and 120-2, respectively, the control apparatuses 120-1 and 120-2 independently exchange path information and address information with the neighboring edge routers 130-1 to 130-4 and sets the results in the communication apparatuses 110-1 to 110-4. If an individual one of the communication apparatuses 110 has a single data forwarding table and if the control apparatuses 120-1 and 120-2 set a data forwarding table for an edge router 130 in a single communication apparatus 110, normally, a conflict occurs in the control of the forwarding table. However, in the present exemplary embodiment, by dividing the input ports (including logical ports) of the communication apparatuses 110-1 to 110-4 into those that can be set by the control apparatus 120-1 and those that can be set by the control apparatus 120-2, the occurrence of a conflict in the control of the forwarding table is prevented. For example, in the example in Fig. 9, the control apparatus 120-1 manages input ports P1 to P4 of the communication apparatuses 110 via its own input ports P1 to P4, and the control apparatus 120-2 manages input ports P5 to P8 of the communication apparatuses 110 via its own input ports P5 to P8.

While the edge routers 130-1 to 130-4 simultaneously exchange path information and address information with the control apparatuses 120-1 and 120-2 having the respective IP addresses, the edge routers 130-1 to 130-4 select a path having a higher priority level between the two systems in accordance with a routing protocol and forward data packets. For example, in the state in Fig. 9, regarding a certain packet, the router 130-1 determines that the communication apparatus 110-1 controlled by the control apparatus 120-1 has a higher priority level and selects a path connected to the communication apparatus 110-1 (see the solid line between the router 130-1 and the communication apparatus 110-1). If any one of the edge routers 130-1 to 130-4 detects occurrence of a failure in a path having a higher priority level, the edge router 130 can exchange path information again with the control apparatuses 120-1 and 120-2 and switch the path to the other path in which no failure has occurred for data forwarding. For example, if a failure occurs in a path managed by the control apparatus 120-1, the router 130-1 determines that the path connected to the communication apparatus 110-2 controlled by the control apparatus 120-2 has a higher priority level and switches the path to the path connected to the communication apparatus 110-2 (see the dashed line between the router 130-1 and the communication apparatus 110-2).

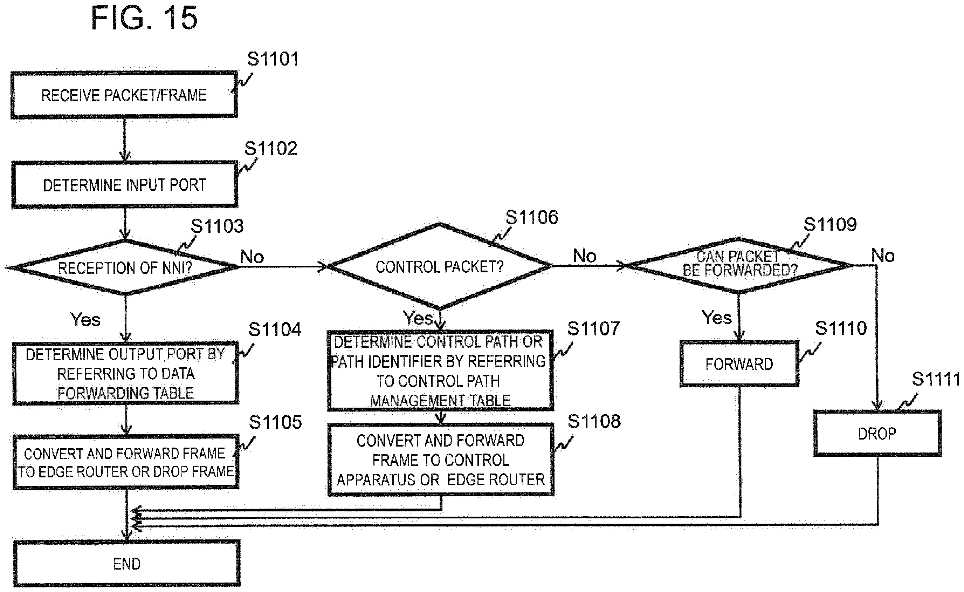

Next, operations performed by the communication apparatuses 110 and the control apparatuses will be described in detail. First, an operation performed by a communication apparatus 110 will be described with reference to Figs. 11 and 15. As illustrated in Fig. 15, first, the input unit 111 of the communication apparatus 110 receives a packet/frame (step S1101). Next, the input unit 111 determines an input port and forwards the received packet/frame to the control packet division and multiplexing unit 112 (step S1102).

Next, the control packet division and multiplexing unit 112 determines the type of the received packet/frame (step S1103). If the type indicates an NNI (Network to Network Interface), namely, if the communication apparatus 110 has received a frame from another communication apparatus (Yes in step S1103), the control packet division and multiplexing unit 112 forwards the received frame to the data packet processing unit 116. When receiving the frame, the data packet processing unit 116 searches the first and second data forwarding tables 117 and 118 for an entry that matches the corresponding input port and destination information (step S1104).

As a result of the search, if a matching entry is found, the data packet processing unit 116 converts the frame and forwards the frame to the corresponding edge router 130 via the output port in the matching entry. However, if, as a result of the search, no matching entry is found (mishit), the data packet processing unit 116 drops the frame (step S1105).

If the type does not indicate an NNI, the communication apparatus 110 determines whether the received packet is a control packet (step S1106). If the received packet is a control packet (Yes in step S 11 06), the communication apparatus 110 searches the first control path management table 114 or the second control path management table 115 for an entry that matches the corresponding input port information or path identifier and determines a control path or an output port (step S1107). Next, the communication apparatus 110 converts the frame and transmits the frame to the control apparatus 120-1 or 120-2 or to an edge router 130 (step S1108).

If the received packet is not a control packet (No in step S 11 06), the communication apparatus 110 determines whether the packet can be forwarded by searching the first and second data forwarding tables 117 and 118 for an entry that matches the corresponding destination information (step S1109). If a matching entry is found, the communication apparatus 110 converts and forwards the packet to the next communication apparatus (step S1110). Otherwise (mishit), the communication apparatus 110 drops the packet (step S1111).

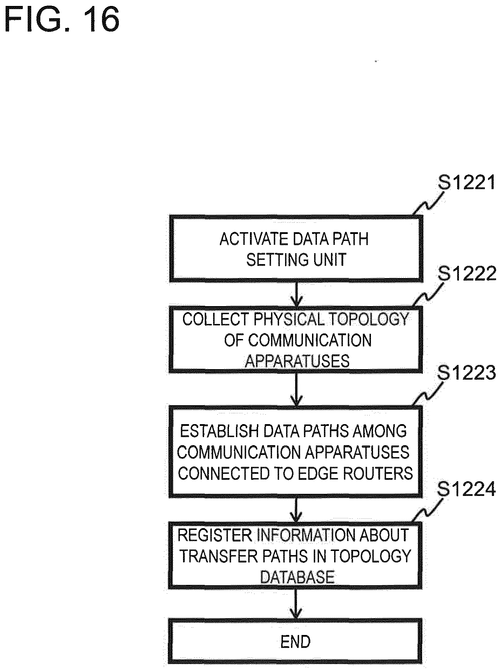

Next, an operation performed by a control apparatus 120 will be described in detail with reference to Figs. 14, 16, and 17. First, an operation performed by the control apparatus 120 from collection of a connection relationship among the communication apparatuses 110 to determination of a transmission path will be described. As illustrated in Fig. 16, before exchanging a routing protocol with the edge routers 130-1 to 130-4, the control apparatus 120 activates the data path setting unit 122 (step S1221) and collects a physical topology of the communication apparatuses 110 (step S1222). Next, the control apparatus 120 establishes transmission paths for performing data transmission among the communication apparatuses 110-1 to 110-4 connected to the edge routers 130-1 to 130-4 (step S1223) and registers the information about the transmission paths in the topology database 123 (step S1224).

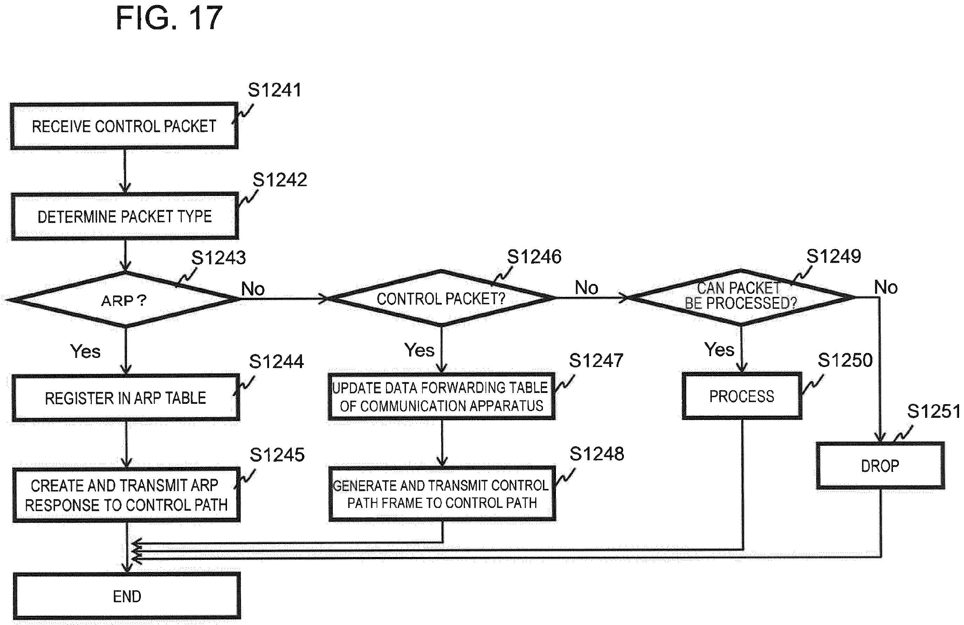

Fig. 17 is a flowchart illustrating an operation performed by a mapping setting unit in the control apparatus after the transmission paths are determined. As illustrated in Fig. 17, when the transmission and reception unit 121 in the control apparatus 120 receives a control packet (step S1241), the transmission and reception unit 121 determines control path information (step S1242).

Next, the control apparatus 120 determines whether the received packet is an ARP request (step S1243). If the received packet is an ARP request (Yes in step S1243), the control apparatus 120 registers the reception result in the ARP table (step S1244). Next, the control apparatus 120 creates and transmits an ARP response packet to the control path (step S1245).

If the received packet is not an ARP request, the control apparatus 120 determines whether the received packet is a control packet based on BGP (Border Gateway Protocol), OSPF (Open Shortest Path First), or the like (step S1246). If the received packet is a control packet (Yes in step S1246), the control apparatus 120 changes a data forwarding table of a communication apparatus 110. In this operation, the control apparatus 120 updates the data forwarding table of the communication apparatus 110 that corresponds to the received control packet (step S1247). Next, the control apparatus 120 generates and transmits a control path frame to the control path, to forward the control path frame to the edge routers 130-1 to 130-4 via the communication apparatus 110 (step S1248).

If the received packet is a different packet, the control apparatus 120 determines whether the control apparatus 120 can process the packet (step S1249). If so, the control apparatus 120 processes the packet (step S1250). If not, the control apparatus 120 drops the received packet (step S1251).

As is clear from the above description, according to the present exemplary embodiment, the two control apparatuses 120-1 and 120-2 exchange path information with the edge routers 130 and sets data forwarding paths. In addition, the communication apparatuses 110 forwards data from clients, based on the paths set by these control apparatuses 120-1 and 120-2. In this way, the fault tolerance of a configuration in which a transmission network is arranged between or among routers can be improved, and a conflict of control can also be avoided.

While exemplary embodiments of the present invention have thus been described, the present invention is not limited thereto. Further variations, substations, or adjustments are possible without departing from the basic technical concept of the present invention. For example, the configuration of an individual network, the configuration of an individual element, and the representation mode of an individual message in the drawings should be deemed as examples to facilitate understanding of the present invention. Namely, the present invention is not limited to any of the configurations illustrated in these drawings.

For example, in the above fifth exemplary embodiment, when a communication apparatus forwards data to another communication apparatus, the communication apparatus converts the data into a predetermined frame. However, alternatively, the communication apparatus may write a flow identifier such as a VLAN ID in the header when forwarding the data.

For example, an individual one of the communication apparatuses according to the fifth exemplary embodiment can be configured based on an OpenFlow switch in NPLs 1 and 2. In this case, an individual one of the first and second data forwarding tables 117 and 118 and the first and second control path management tables 114 and 115 can be realized by a flow table in NPLs 1 and 2.

Finally, suitable modes of the present invention will be summarized.

### (Mode 1)

See the communication system according to the above first aspect.

### (Mode 2)

The communication system according to mode 1, wherein the first and second control units set control information in the communication apparatus(es) in accordance with the first and second rules to perform load balancing or failure recovery, the control information causing the communication apparatus(es) to request the first and second control units, respectively, to set control information in the communication apparatus(es).

### (Mode 3)

The communication system according to mode 1 or 2, wherein forwarding resources of the communication apparatus(es) are respectively associated with the first and second control units, and input to the forwarding resources of the communication apparatus(es) is switched among the forwarding resources to perform load balancing or failure recovery.

### (Mode 4)

The communication system according to mode 3, wherein the communication apparatus(es) comprises tables for storing control information supplied respectively from the first and second control units, and
the first and second control units respectively update an allocated table(s) to control the communication apparatus(es).

### (Mode 5)

The communication system according to mode 3 or 4, wherein the control information stores a match condition(s) for identifying a flow(s) and a processing content(s) applied to a packet(s) that matches the match condition(es) in association with each other, and the first and second control units update the allocated table(s) per flow.

### (Mode 6)

The communication system according to any one of modes 1 to 5, wherein
the first and second control units are prepared for different network operators, and
the network operators use allocated one of the first and second control units.

### (Mode 7)

The communication system according to any one of modes 1 to 6, wherein
the first and second control units are configured by physically different apparatuses, and
the communication apparatus(es) is connected to the physically different apparatuses via different channels.

### (Mode 8)

The communication system according to any one of modes 3 to 7, wherein
each of the first and second control units changes, depending on a load status thereof, allocation of the forward resource(s) of the communication apparatus(es) associated therewith.

### (Mode 9)

The communication system according to any one of modes 1 to 8, wherein
the first and second control units exchange path information with an external apparatus(es) to change a forwarding table(s) of the communication apparatus(es).

### (Mode 10)

See the control apparatus according to the above second aspect.

### (Mode 11)

See the communication apparatus according to the above third aspect.

### (Mode 12)

See the communication apparatus according to the above fourth aspect.

### (Mode 13)

See the communication method according to the above fifth aspect. The above modes 10 to 13 can be expanded in the same way as mode 1 is expanded to modes 2 to 9.

The disclosure of each of the above PTLs and NPLs is incorporated herein by reference thereto. Modifications and adjustments of the exemplary embodiments and the examples are possible within the scope of the overall disclosure (including the claims) of the present invention and based on the basic technical concept of the present invention. In addition, various combinations and selections of various disclosed elements (including the elements in each of the claims, exemplary embodiments, examples, drawings, etc.) are possible within the scope of the claims of the present invention. Namely, the present invention of course includes various variations and modifications that could be made by those skilled in the art according to the overall disclosure including the claims and the technical concept. In particular, the present description discloses numerical value ranges. However, even if the description does not particularly disclose arbitrary numerical values or small ranges included in the ranges, these values and ranges should be deemed to have been specifically disclosed.

### [REFERENCE SIGNS LIST]

10, 110, 110A, 110-1 to 110-4, 210, 210-1 to 210-4, 310, 310-1 to 310-4 communication apparatus
11 packet processing unit
12 communication interface
13 storage unit
20, 20A, 20B, 20-1, 20-2, 120, 120-1, 120-2, 220, 220-1, 220-2, 320, 320-1, 320-2control apparatus
21 first control unit
22 second control unit
23 third control unit
24 communication interface
25 identification unit
26 storage unit
110-11, 110-12 virtual communication apparatus unit
111 input unit
112 control packet division and multiplexing unit
113 control packet processing unit
114, 114-1, 114-2 first control path management table
115, 115-1, 115-2 second control path management table
116, 216 data packet processing unit
117, 117-1, 117-2 first data forwarding table
118, 118-1, 118-2 second data forwarding table
119 output unit
121 transmission and reception unit
122 data path setting unit
123 topology database
124 mapping setting unit
125 control path management table
130, 130-1 to 130-4 router (edge router)

## Claims

1. A communication system, comprising:
a communication apparatus(es) that processes a packet(s) in accordance with externally set control information; and
a control apparatus(es) that sets control information in the communication apparatus(es) to control the communication apparatus(es), wherein
a first control unit that sets control information in accordance with a first rule(s) and a second control unit that sets control information in accordance with a second rule(s) are arranged as the control apparatus(es), and
the first and second control units control the communication apparatus(es) independently of each other.

2. The communication system according to claim 1, wherein
the first and second control units set control information in the communication apparatus(es) in accordance with the first and second rules to perform load balancing or failure recovery, the control information causing the communication apparatus(es) to request the first and second control units, respectively, to set control information in the communication apparatus(es).

3. The communication system according to claim 1 or 2, wherein
forwarding resources of the communication apparatus(es) are respectively associated with the first and second control units, and
input to the forwarding resources of the communication apparatus(es) is switched among the forwarding resources to perform load balancing or failure recovery.

4. The communication system according to any one of claims 1 to 3, wherein
the communication apparatus(es) comprises tables for storing control information supplied respectively from the first and second control units, and
the first and second control units respectively update an allocated table(s) to control the communication apparatus(es).

5. The communication system according to claim 3 or 4, wherein
the control information stores a match condition(s) for identifying a flow(s) and a processing content(s) applied to a packet(s) that matches the match condition(es) in association with each other, and
the first and second control units update the allocated table(s) per flow.

6. The communication system according to any one of claims 1 to 5, wherein
the first and second control units are prepared for different network operators, and
the network operators use allocated one of the first and second control units.

7. The communication system according to any one of claims 1 to 6, wherein
the first and second control units are configured by physically different apparatuses, and
the communication apparatus(es) is connected to the physically different apparatuses via different channels.

8. The communication system according to any one of claims 3 to 7, wherein
each of the first and second control units changes, depending on a load status thereof, allocation of the forward resource(s) of the communication apparatus(es) associated therewith.

9. The communication system according to any one of claims 1 to 8, wherein
the first and second control units exchange path information with an external apparatus(es) to change a forwarding table(s) of the communication apparatus(es).

10. A control apparatus for controlling a communication apparatus(es) that process a packet(s) in accordance with externally set control information, the control apparatus comprising:
a first control unit that sets control information in accordance with a first rule(s); and
a second control unit that sets control information in accordance with a second rule(s), wherein
the first and second control units control the communication apparatus(es) independently of each other.

11. A communication apparatus for controlling a communication apparatus(es) that processes packets in accordance with externally set control information, wherein
the communication apparatus controls the communication apparatus(es) in accordance with a second rule(s), independently of a control apparatus that sets control information in accordance with a first rule(s).

12. A communication apparatus, connected to a first control unit that sets control information in accordance with a first rule(s) and a second control unit that sets control information in accordance with a second rule(s), the first and second control units operating independently of each other, wherein
the communication apparatus processes a packet(s) in accordance with control information set by the first and second control units.

13. A communication method for a communication system including a communication apparatus(es) that processes a packet(s) in accordance with externally set control information and a control apparatus(es) that controls the communication apparatus(es) by setting control information in the communication apparatus(es), the communication method comprising:
by a first control unit that sets control information in accordance with a first rule(s) and a second control unit that sets control information in accordance with a second rule(s), operating as the control apparatus(es) independently of each other to set control information in the communication apparatus(es); and
by the communication apparatus(es), processing a packet(s) in accordance with the control information.
